# EUROPÄISCHE PATENTANMELDUNG

(11) **EP 4 790 020 A1**
(43) Veröffentlichungstag der Anmeldung: **12.08.2026**
(21) Anmeldenummer: 25156758.2
(22) Anmeldetag: 10.02.2025
(51) Int. Cl.: C01D 1/04, C01D 3/06, C01D 7/07, C01F 11/06, C01F 11/18

(54) **VERFAHREN UND VORRICHTUNG ZUM GEWINNEN VON NATRIUMCHLORID**

(71) Anmelder: Salinen Austria Aktiengesellschaft, 4802 Ebensee (AT)
(72) Erfinder: HAAN, Herbert, 4820 Bad Ischl (AT)
(74) Vertreter: SONN Patentanwälte GmbH & Co KG

(57) **Zusammenfassung**

Die Erfindung betrifft ein Verfahren zum Gewinnen von Natriumchlorid (12) aus einer Calciumionen enthaltenden Sole mit den Schritten:
a) Ausfällen eines Calciumcarbonat enthaltenden Carbonatfällungsproduktes (9) aus der Sole mit Natriumcarbonat und/oder Natriumbicarbonat als Fällungsreagens,
b) Gewinnen von Natriumchlorid (12) aus der im Wesentlichen von Calciumionen befreiten Sole,
c) Herstellen von Natriumhydroxid durch Elektrolyse von Natriumchlorid (12),
d) Herstellen von Natriumcarbonat und/oder Natriumbicarbonat durch Umsetzen des Natriumhydroxids mit Kohlendioxid (8), wobei das Kohlendioxid (8) wenigstens teilweise aus dem Verfahren zum Gewinnen von Natriumchlorid (12) stammt,
wobei das durch Umsetzen des Natriumhydroxids mit Kohlendioxid (8) hergestellte Natriumcarbonat und/oder Natriumbicarbonat wenigstens teilweise als Fällungsreagens zum Ausfällen des Carbonatfällungsproduktes (9) verwendet wird.

## Beschreibung

Die Herstellung von Siedesalz in Salinen erfolgt üblicherweise durch das Verdampfen von Wasser aus einer gesättigten Solelösung. Die Sole wird dabei in Verdampfern erhitzt, wobei das Wasser verdampft und das Salz kristallisiert. Der zum Betrieb der Verdampfer benötigte Energieaufwand wird häufig wenigstens teilweise durch die Verbrennung fossiler Brennstoffe gedeckt, beispielsweise durch Erdgas oder Heizöl, um den benötigten Dampf zu erzeugen. Dieser Prozess führt zur Freisetzung von CO₂ als Nebenprodukt der Verbrennung. CO₂-Emissionen sind bekanntermaßen problematisch, weil sie maßgeblich zum Klimawandel beitragen.

Bei der Gewinnung von Natriumchlorid durch Verdampfungskristallisation muss die eingesetzte Rohsole vor der Eindampfung von den enthaltenen Härtebildnern soweit wie möglich befreit werden. Dies geschieht in der Solereinigung bzw. Soleenthärtung durch Entfernung der in der Rohsole enthaltenen Erdalkaliionen, insbesondere Calcium- und Magnesiumionen. Dabei wird auch die Sulfationenkonzentration durch Ausfällung von Gips reduziert.

Die durch Solung bzw. Auflösen von Steinsalz gewonnene Rohsole enthält als Hauptkomponente Natriumchlorid, aber auch, je nach Reinheit und Mineralbestand der Salzlagerstätte, gelöste Nebenkomponenten wie Kaliumchlorid oder Kaliumsulfat, gelöste Erdalkalisulfate in Form von Magnesium-, Calcium-, und/oder Strontiumsulfat, sowie meistens etwas Hydrogencarbonat und Bromid. Die störenden Erdalkalien werden im Prozess der Solereinigung vorzugsweise durch Fällung entfernt und ergeben den Soleenthärtungsrückstand, der aktuell häufig als Verfüllmaterial in ausgelaugten Kavernen verwendet wird. Langfristig muss der Soleenthärtungsrückstand voraussichtlich als Reststoff entsorgt werden.

Der Prozessschritt der Ausfällung von Erdalkaliionen und Sulfationen wird als Solereinigung oder Soleenthärtung bezeichnet und erfolgt durch Zugabe von Calciumhydroxid, Natriumhydroxid, Kohlendioxid und/oder Soda (Natriumcarbonat) in die Rohsole.

Ein häufig eingesetztes Verfahren zur Soleenthärtung ist das Schweizerhalle-Verfahren. Dabei wird aus der Rohsole und einem Teil der Salinenmutterlauge, üblicherweise in zwei Fällstufen, eine Reinsole hergestellt, die so geringe Restkonzentrationen an krustenbildenden Nebenkomponenten enthält, dass diese den Prozess der Siedesalzherstellung nicht stören.

Die Ausfällung der gelösten Magnesiumionen erfolgt durch Zusatz von Kalkmilch bzw. Natronlauge als Magnesiumhydroxid in der ersten Stufe der Solereinigung. Durch Zugabe von Kalkmilch kann nahezu sämtliches Magnesium entfernt werden. Dabei entsteht als Fällprodukt Magnesiumhydroxid als Gemisch mit Gips.

Die weitere Reinigung der Sole erfolgt durch Entfernung des Calciums als Calciumcarbonat. Nach Sedimentation des in der ersten Fällstufe gebildeten Magnesiumhydroxides ist die klare Sole aus der ersten Fällstufe reich an Calciumhydroxid und mit Calciumsulfat gesättigt. Das gelöste Calcium wird durch Zusatz von Kohlendioxid enthaltendem Rauchgas und Soda als schwerlösliches Calciumcarbonat ausgefällt.

Die Soleenthärtungsrückstände beider Stufen stellen bisher ein Reststoffgemisch dar und werden gemeinsam nach der zweiten Fällstufe abgetrennt und nach der Filtration durch Rückführung der Feststoffe in ausgesolte Kavernen oder Altbergwerke entsorgt. Alternativ könnten die Soleenthärtungsrückstände nach der notwendigen Reinigung bzw. Wäsche und Trocknung als basisches Düngemittel genutzt werden. Dabei stehen Aufwand und Erlös jedoch in der Regel in keinem günstigen Verhältnis zueinander, da ein Stoffgemisch aus Magnesiumhydroxid, Gips, Fällkalk und Natriumchlorid ein wenig attraktives Düngemittel darstellt. Daher werden die Soleenthärtungsrückstände derzeit zumeist ungenutzt entsorgt und die darin enthaltenen Rohstoffe, wie Magnesiumhydroxid, Gips und Kalk, gehen verloren.

Bei den bekannten Verfahren werden Kalk und Soda für die beiden Fällungsschritte laufend verbraucht und müssen extern zugekauft werden, was sich naturgemäß in den Betriebskosten niederschlägt.

Die konventionellen Herstellungsverfahren für die Hilfsstoffe Kalk und Soda (z.B. das Solvay-Verfahren zur Herstellung von Soda) sind zudem CO₂-intensiv was den CO₂-Fußabdruck des Produktes Natriumchlorid zusätzlich vergrößert. Aufgrund regulatorischer Maßnahmen, wie der Einführung einer CO₂-Steuer in zahlreichen Ländern, ist zudem zu erwarten, dass der Marktpreis dieser Hilfsstoffe weiter steigen wird. Aus den genannten Gründen wäre es daher wünschenswert, den Bedarf an Kalk und Soda für die Solereinigung zu verringern.

Die US 9,643,858 B2 offenbart ein Verfahren zur Herstellung von Carbonaten aus Meerwasser mit gleichzeitiger Bindung von Kohlendioxid (Carbon Capture). Als Zwischenschritt wird auch eine Elektrolyse von NaCl zur Herstellung von NaOH durchgeführt, welches wiederum mit CO₂ zu Na₂CO₃ umgesetzt wird. Als Endprodukte des offenbarten Verfahrens werden CaCO₃ und Na₂CO₃ erhalten. Eine Rückführung dieser Produkte in den Prozess ist nicht vorgesehen.

Im Lichte dieser Ausführungen ist es Aufgabe der vorliegenden Erfindung, die Nachteile des Standes der Technik zu lindern. Insbesondere ist es Aufgabe der vorliegenden Erfindung, ein Verfahren zum Gewinnen von Natriumchlorid bereitzustellen, wobei für die Solereinigung benötigtes Soda unter minimaler Freisetzung von CO₂, vorzugsweise ohne Freisetzung von CO₂, hergestellt werden kann.

Daher umfasst das erfindungsgemäße Verfahren die folgenden Schritte:
a) Ausfällen eines Calciumcarbonat enthaltenden Carbonatfällungsproduktes aus der Sole mit Natriumcarbonat und/oder Natriumbicarbonat als Fällungsreagens,
b) Gewinnen von Natriumchlorid aus der im Wesentlichen von Calciumionen befreiten Sole,
c) Herstellen von Natriumhydroxid durch Elektrolyse von Natriumchlorid,
d) Herstellen von Natriumcarbonat und/oder Natriumbicarbonat durch Umsetzen des Natriumhydroxids mit Kohlendioxid, wobei das Kohlendioxid wenigstens teilweise aus dem Verfahren zum Gewinnen von Natriumchlorid stammt,
wobei das durch Umsetzen des Natriumhydroxids mit Kohlendioxid hergestellte Natriumcarbonat und/oder Natriumbicarbonat wenigstens teilweise als Fällungsreagens zum Ausfällen des Carbonatfällungsproduktes verwendet wird.

Mit dem erfindungsgemäßen Verfahren kann Natriumcarbonat und/oder Natriumbicarbonat, welches für die Carbonatfällung benötigt wird, aus (Neben-)Produkten des Verfahrens selbst hergestellt werden: Natriumhydroxid kann aus Natriumchlorid - dem Hauptprodukt des erfindungsgemäßen Verfahrens - mittels Chlor-Alkali-Elektrolyse, vorzugsweise CO₂-neutral, hergestellt werden. Die Umsetzung von Natriumhydroxid zu Natriumcarbonat und/oder Natriumbicarbonat kann mit prozesseigenem CO₂ erfolgen, wodurch dieses rezirkuliert und daher nicht in die Umgebung ausgestoßen wird. Daher ist es möglich, mit dem erfindungsgemäßen Verfahren das für die Solereinigung im Carbonatfällungsschritt benötigte Soda CO₂-neutral herzustellen. Im Rahmen des erfindungsgemäßen Verfahrens kann außerdem ein externer Zukauf von Soda und/oder Natriumhydroxid entfallen, wodurch Kosten gesenkt und die Abhängigkeit von externen Lieferanten verringert werden kann.

Als Sole wird im Kontext dieser Offenbarung eine wässrige Lösung bezeichnet, die Natrium, Chlorid und vorzugsweise weitere Ionen enthält. Sole kann durch das Lösen von Salz in Wasser, das Auslaugen von unterirdischen Salzlagerstätten mit Wasser, das Fördern von natürlicher Sole aus salzhaltigen Quellen oder Aquiferen, oder das Fördern von anderen natriumchloridhaltigen wässrigen Lösungen, wie Meerwasser, gewonnen werden. Die vorliegende Erfindung eignet sich insbesondere für Sole, die durch das Auslaugen von unterirdischen Salzlagerstätten mit Wasser gewonnen wurde.

Als Rohsole wird im Kontext dieser Offenbarung eine Sole vor der Entfernung von Ionen aus der Sole durch das erfindungsgemäße Verfahren bezeichnet. Die Rohsole kann auch eine rezirkulierte Salinenmutterlauge und/oder ein Filtrat aus einer Pressung eines Soleenthärtungsrückstandes enthalten. Die Rohsole enthält vorzugsweise neben Natrium-, Chlorid-, Sulfat- und Magnesiumionen auch Kalium-, Calcium- und Bromidionen. Die Rohsole kann weiters Silizium-, Lithium- und Borionen, sowie weitere Ionen enthalten. Als Reinsole wird im Kontext dieser Offenbarung eine Sole bezeichnet, aus der durch das erfindungsgemäße Verfahren Ionen entfernt wurden.

Das Herstellen von Natriumhydroxid aus Natriumchlorid erfolgt vorzugsweise mittels Chor-Alkali-Elektrolyse. Die dafür benötigte elektrische Energie stammt vorzugsweise aus erneuerbaren Quellen.

Bei der Chlor-Alkali-Elektrolyse entsteht vorzugsweise Chlor (Cl₂) als Nebenprodukt, welches als Rohstoff in der chemischen Industrie genutzt werden kann, beispielsweise zur Herstellung von Kunststoffen wie Polyvinylchlorid.

Für die Chlor-Alkali-Elektrolyse können Prozesse angewandt werden, in denen neben Chlor und Natronlauge auch Wasserstoff (H₂) erzeugt wird, wie beispielsweise Membran-, Diaphragma- oder Amalgamverfahren. Der hergestellte Wasserstoff kann beispielsweise zum Betrieb von Fahrzeugen verwendet werden. So kann beispielsweise der Energiebedarf für eine vorzugsweise CO₂-freie Auslieferung von Produkten wie Natriumchlorid wenigstens teilweise gedeckt werden.

Alternativ können für die Chlor-Alkali-Elektrolyse Prozesse angewandt werden, die keinen Wasserstoff erzeugen, vorzugsweise aber weniger elektrische Energie verbrauchen. Beispiele dafür sind Prozesse, die eine Sauerstoffverzehrkathode verwenden.

Vorzugsweise wird das Carbonatfällungsprodukt mithilfe einer Abscheidevorrichtung, wie einem Absetzbehälter und/oder einer Filterpresse von der Sole abgetrennt. Das Carbonatfällungsprodukt besteht vorzugsweise im Wesentlichen aus Calciumcarbonat und kann als solches verkauft oder in den Prozess rückgeführt werden. So wird die Produktion von Abfällen verringert, da das Carbonatfällungsprodukt, im Gegensatz zu den Soleenthärtungsrückständen der bekannten Verfahren, vollständig verwertet werden kann. Zudem kann der Verkauf von Calciumcarbonat eine Einnahmequelle darstellen. Calciumcarbonat kann beispielsweise als Pflanzennährstoff oder zur Neutralisation saurer Böden verwendet werden.

Das Ausfällen eines Calciumcarbonat enthaltenden Carbonatfällungsproduktes wird im Rahmen dieser Offenbarung als Carbonatfällung oder Carbonatfällungsschritt bezeichnet. Als Fällungsreagens kann in dem Carbonatfällungsschritt sowohl reines CO₂, ein CO₂-haltiges Abgas, eine CO₂-haltige Abluft, ein Carbonat, vorzugsweise Natriumcarbonat und/oder Natriumbicarbonat, oder eine beliebige Kombination davon verwendet werden.

Vorzugsweise wird für das Ausfällen des Calciumcarbonat enthaltenden Carbonatfällungsproduktes Natriumcarbonat als Fällungsreagens verwendet. Mit Natriumcarbonat kann Vergleich zu Natriumbicarbonat eine geringere Löslichkeit von Calciumionen erreicht werden, wodurch die Calciumionen vollständiger abgeschieden werden können.

Natriumcarbonat und Natriumbicarbonat sind als Feststoffe wesentlich leichter handhabbar als gasförmiges CO₂ und können daher auch leichter auf Vorrat gehalten werden, wodurch CO₂ in dieser gebundenen Form effektiv und ohne aufwendigen Gas-Druckspeicher gespeichert werden kann.

Das Natriumcarbonat und/oder Natriumbicarbonat kann wenigstens teilweise als Hilfsstoff zugekauft werden. Bevorzugt wird das Natriumcarbonat und/oder Natriumbicarbonat durch Umsetzen von CO₂ mit Natronlauge erzeugt, wobei das CO₂ vorzugsweise aus einem Verbrennungsprozess und/oder aus einer anderen chemischen Reaktion, beispielsweise der Entsäuerung von Carbonaten, stammt.

Bei einer bevorzugten Ausführungsform wird aus dem Carbonatfällungsprodukt Calciumoxid hergestellt, wobei Kohlendioxid gebildet wird. Die Herstellung von Calciumoxid erfolgt vorzugsweise durch Kalkbrennen.

Das Carbonatfällungsprodukt ist einem aus Kalkstein gewonnenen Calciumcarbonat sehr ähnlich, allerdings liegt das Calciumcarbonat (CaCO₃) im Carbonatfällungsprodukt vorzugsweise als feines Pulver vor und kann daher nicht in üblichen Kalkbrennöfen verarbeitet werden. Das Carbonatfällungsprodukt kann zudem Spuren von Natriumchlorid und anderen Salzen enthalten, was bei konventionellen Kalkbrennöfen problematisch ist, da insbesondere Chloride zu Korrosionsschäden an Anlagenteilen führen können. Vorzugsweise wird das Carbonatfällungsprodukt, vorzugsweise mit Wasser, gewaschen, um anhaftendes Natriumchlorid zu entfernen. Das Wasser ist vorzugsweise ein beim Eindampfen der Reinsole zur Gewinnung von Natriumchlorid oder anderen Salzen gewonnenes Kondensat.

Das Kalkbrennen findet vorzugsweise bei Temperaturen zwischen 600 °C und 1300 °C, vorzugsweise zwischen 950 °C und 1150 °C statt. Zu niedrige Temperaturen verringern die Reaktionsgeschwindigkeit und können zu unvollständiger Umsetzung führen, hohe Temperaturen erhöhen den Energieaufwand.

Vorzugsweise wird das Carbonatfällungsprodukt vor dem Kalkbrennen getrocknet. Vorzugsweise entsteht dabei eine Trocknungsabluft, die vorzugsweise mit einer Abscheidevorrichtung, wie einem Zyklon und/oder einem Filter, entstaubt wird. Die Wärme der Trocknungsabluft kann für die Vorwärmung von frischer Trocknungsluft oder für andere Zwecke verwendet werden.

Die Ausbeute an Calciumoxid beträgt beim Kalkbrennen vorzugsweise mindestens 80 %, mehr bevorzugt mindestens 90 %.

Gemäß einer bevorzugten Ausführungsform wird das beim Herstellen von Calciumoxid aus dem Carbonatfällungsprodukt gebildete Kohlendioxid wenigstens teilweise zum Herstellen des für die Carbonatfällung eingesetzten Natriumcarbonats und/oder Natriumbicarbonats verwendet.

Durch die Verwendung des beim Herstellen von Calciumoxid aus dem Carbonatfällungsprodukt, insbesondere beim Kalkbrennen, gebildeten Kohlendioxids als Fällungsreagens im Carbonatfällungsschritt und/oder für die Herstellung von Natriumcarbonat und/oder Natriumbicarbonat entsteht ein Kreislaufprozess. Dadurch können die CO₂-Emissionen bei der Herstellung von Calciumoxid verringert oder gänzlich vermieden werden. Neben der Vermeidung von CO₂-Emissionen kann durch die Verwendung des CO₂ als Fällungsreagens der externe Zukauf von Fällungsreagenzien, verringert oder vermieden werden. Dadurch kann die Abhängigkeit von externen Rohstofflieferanten verringert werden.

Die aus dem Stand der Technik bekannten Verfahren zur Herstellung von Soda, wie zum Beispiel das Solvay-Verfahren, sind ist sehr energieaufwändig und verursachen einen hohen CO₂-Ausstoß. Der CO₂-Ausstoß kann beispielsweise bei 1-1,3 t CO₂ pro Tonne Soda liegen. Daher ist es zur Verringerung des CO₂-Fußabdrucks insbesondere wünschenswert, kein zugekauftes Soda einsetzen zu müssen.

Der Begriff Soda bezeichnet im Kontext der vorliegenden Offenbarung Natriumcarbonat, Natriumbicarbonat und Mischungen daraus.

Das beim Kalkbrennen im erfindungsgemäßen Verfahren erzeugte CO₂ kann mithilfe eines Carbon-Capture-Verfahrens, wie Aminwäsche, aufkonzentriert werden. Dadurch kann der apparative Aufwand verringert werden, da die zu fördernde Gasmenge reduziert wird, wenn anstatt der verdünnten CO₂-haltigen Abluft das aufkonzentrierte CO₂ zur Carbonatfällung und/oder zur Herstellung von Natriumcarbonat und/oder Natriumbicarbonat verwendet wird. Bevorzugt ist die CO₂-Konzentration in der Abluft der Kalkbrenneinheit hoch genug, dass die Abluft ohne wesentlich erhöhten apparativen Aufwand und ohne vorgeschaltetes Carbon-Capture-Verfahren zur Carbonatfällung und/oder Herstellung von Natriumcarbonat und/oder Natriumbicarbonat genutzt werden kann.

Bei einer bevorzugten Ausführungsform wird in einem Sulfatfällungsschritt ein Magnesiumhydroxid und/oder Calciumsulfat enthaltendes Sulfatfällungsprodukt aus der Sole ausgefällt, wobei aus dem Carbonatfällungsprodukt hergestelltes Calciumoxid, vorzugsweise nach Umsetzung des Calciumoxids zu Calciumhydroxid, als Fällungsreagens verwendet wird. Die Umsetzung von Calciumoxid zu Calciumhydroxid erfolgt vorzugsweise durch Löschen mit Wasser und/oder einer Sole.

Durch die Verwendung des aus dem Carbonatfällungsprodukt hergestellten Calciumoxids als Fällungsreagens im Sulfatfällungsschritt entsteht ein Kreislaufprozess. So kann einerseits der Zukauf von Hilfsstoffen, insbesondere von Kalk, minimiert, und andererseits die Produktion von Reststoffen vermieden werden, da das Carbonatfällungsprodukt vollständig verwertet werden kann.

Mit dem Begriff Kalk werden im Kontext dieser Offenbarung Calciumhydroxid, Calciumoxid und Mischungen daraus bezeichnet, die zudem auch Wasser und/oder Sole enthalten können.

Der in herkömmlichen Prozessen zur Solereinigung verwendete zugekaufte Kalk wird üblicherweise als Kalkgestein aus der Natur gewonnen und anschließend durch Vorzerkleinerung und Kalkbrennen zu Calciumoxid verarbeitet, wobei allein durch die Entsäuerungsreaktion eine große Menge CO₂ freigesetzt wird. Um die zum Kalkbrennen benötigten Temperaturen zu erhalten, werden die meisten Kalkbrennöfen des Standes der Technik mit Erdgas oder einem anderen fossilen Energieträger betrieben, wobei weiteres CO₂ freigesetzt wird. Insgesamt ist die Herstellung von Kalk daher sehr CO₂-intensiv. Mit der Kreislaufführung von CO₂ gemäß der Erfindung können diese CO₂-Emissionen vorzugsweise verringert oder sogar vollständig eingespart werden.

Mit dieser Ausführungsform können sowohl Magnesium- als auch Sulfationen effizient in einem einzigen Fällungsschritt aus der Sole entfernt werden. Das Ausfällen eines Magnesiumhydroxid und Calciumsulfat enthaltenden Sulfatfällungsproduktes wird im Kontext dieser Offenbarung als Sulfatfällung oder Sulfatfällungsschritt bezeichnet. Bei der Sulfatfällung verbleibt vorzugsweise ein Teil des Sulfates in der Sole. Beispielsweise kann Sulfat nach der Sulfatfällung in einer Konzentration von bis zu 20 g/L in der Sole verbleiben.

Vorzugsweise werden in dem Sulfatfällungsschritt Calciumoxid, Calciumhydroxid, Kalkmilch oder ähnliche Produkte als Fällungsreagenzien verwendet. Alternativ ist auch die Verwendung von Natriumhydroxid möglich. Vorzugsweise werden die in der Rohsole enthaltenen Magnesiumionen durch den Sulfatfällungsschritt im Wesentlichen vollständig aus der Rohsole ausgefällt.

Das Sulfatfällungsprodukt wird vorzugsweise separat von dem Carbonatfällungsprodukt von der Sole abgetrennt. Im Unterschied zu verschiedenen Solereinigungsverfahren des Standes der Technik werden so vorzugsweise anstatt eines einzigen Soleenthärtungsrückstandes in Form eines schwer verwertbaren Stoffgemisches zwei isolierte Fällungsprodukte, nämlich das Sulfatfällungsprodukt und das Carbonatfällungsprodukt, erhalten, aus denen jeweils hochwertige Nebenprodukte gewonnen werden können, die gegebenenfalls im Prozess rezirkuliert werden können. Durch die separate Abscheidung des Carbonatfällungsproduktes und des Sulfatfällungsproduktes kann ein Rücktransport von Soleenthärtungsrückständen in die Solkavernen vorzugsweise vollständig vermieden werden. Stattdessen können vorzugsweise sämtliche bei der Solereinigung anfallenden Fällungsprodukte zu wertvollen Nebenprodukten in Form reiner Einzelstoffe, wie Magnesiumsulfat bzw. Magnesiumsulfat-Hydrate, Gips in marktüblicher Qualität und verkaufsfähigem Fällkalk (CaCO₃), weiterverarbeitet werden.

Gemäß einer bevorzugten Ausführungsform wird das zum Herstellen des Natriumcarbonats und/oder Natriumbicarbonats verwendete Kohlendioxid wenigstens teilweise durch Verbrennung von kohlenstoffhaltigen Stoffen zum Zwecke der Wärmeerzeugung für das Gewinnen von Natriumchlorid aus der im Wesentlichen von Calciumionen befreiten Sole erzeugt. Dadurch kann im Prozess anfallendes CO₂ besonders effektiv verwertet werden, wodurch die CO₂-Bilanz der erzeugten Produkte verringert werden kann, ohne dass extern erzeugtes CO₂ herbeigeschafft wird.

Gemäß einer bevorzugten Ausführungsform wird das zum Herstellen von Natriumhydroxid verwendete Natriumchlorid aus der im Wesentlichen von Calciumionen befreiten Sole gewonnen. Vorzugsweise wurde die Sole auch im Wesentlichen von Magnesiumionen befreit.

Durch Verwendung von im erfindungsgemäßen Verfahren hergestelltem Natriumchlorid kann die Herstellung von Natriumhydroxid mittels Elektrolyse ohne externen Zukauf von Rohstoffen stattfinden. Wenn das zur Herstellung von Soda verwendete CO₂ auch aus dem erfindungsgemäßen Verfahren stammt, kann folglich das für die Carbonatfällung benötigte Soda im Wesentlichen ohne Zukauf von Rohstoffen hergestellt werden, wodurch die Abhängigkeit des Verfahrens von externen Rohstofflieferketten wesentlich verringert werden kann.

Gemäß einer bevorzugten Ausführungsform findet das Herstellen von Natriumcarbonat und/oder Natriumbicarbonat durch Umsetzen des Natriumhydroxids mit Kohlendioxid und das Ausfällen des Carbonatfällungsproduktes aus der Sole in einem gemeinsamen Verfahrensschritt statt, wobei Kohlendioxid und Natriumhydroxid separat zugegeben werden und zu Natriumcarbonat und/oder Natriumbicarbonat reagieren, wobei das Natriumcarbonat und/oder Natriumcarbonat mit Calciumionen aus der Sole in situ weiter zu Calciumcarbonat reagiert.

Natriumcarbonat und/oder Natriumbicarbonat stellt in dieser Ausführungsform ein Zwischenprodukt dar, welches in situ gebildet wird und vorzugsweise sofort zu Calciumcarbonat weiterreagiert. Vorzugsweise wird dafür, in Bezug auf die Stoffmenge des CO₂, ein Überschuss an Natriumhydroxid, vorzugsweise in Form konzentrierter Natronlauge, zugegeben. Vorzugsweise wird dabei nur so viel Natronlauge zugegeben, dass eine Ausfällung von Calciumhydroxid aufgrund eines zu hohen pH-Wertes und einer damit verbundenen Überschreitung des Löslichkeitsproduktes vermieden wird.

Außerdem könnte ein zu hoher Überschuss an Natronlauge, der mit der entsprechenden stöchiometrischen Menge an Kohlendioxid zu löslichem Natriumcarbonat reagiert, zu einem unerwünschten Austreiben von Kohlendioxid in einem Verdampfer der Salzsiedeanlage führen. Weiters kann die Verwendung eines hohen Überschusses an NaOH zu höheren Kosten und zu einem erhöhten pH-Wert des hergestellten Natriumchlorids führen, was ebenso unerwünscht ist. Durch die simultane Herstellung von Natriumcarbonat und/oder Natriumbicarbonat in einem gemeinsamen Verfahrensschritt mit der Carbonatfällung kann der apparative Aufwand für das Verfahren verringert werden. Vorzugsweise können die bereits vorhandenen Solereinigungsbehälter einer bestehenden Vorrichtung genutzt werden und es sind keine zusätzlichen Behälter notwendig.

Gemäß einer bevorzugten Ausführungsform findet das Herstellen von Natriumcarbonat und/oder Natriumbicarbonat durch Umsetzen des Natriumhydroxids mit Kohlendioxid wenigstens teilweise in einem vorgelagerten Verfahrensschritt, getrennt vom Ausfällen des Carbonatfällungsproduktes aus der Sole, statt. Vorzugsweise wird dabei das CO₂ in die, vorzugsweise konzentrierte, Natronlauge eingeleitet.

Dadurch kann die Herstellung des Fällungsreagens von der Carbonatfällung verfahrenstechnisch entkoppelt werden, wodurch die beiden Schritte voneinander unabhängig werden. So kann vorzugsweise ein konstanter Verbrauch von CO₂ sichergestellt werden, auch wenn der Bedarf an Fällungsreagens variiert. Umgekehrt kann vorzugsweise immer ausreichend Fällungsreagens bereitgestellt werden, unabhängig von der Verfügbarkeit von CO₂. Damit wird bevorzugt die aufwendige Speicherung von gasförmigem CO₂ effektiv umgangen. Stattdessen kann CO₂ in Form von Natriumcarbonat und/oder Natriumbicarbonat, oder deren wässriger Lösung gespeichert werden. Außerdem kann das Verfahren durch die beschriebene Entkopplung weitgehend unabhängig von zeitlichen bzw. kinetischen Aspekten, wie etwa den Reaktionsgeschwindigkeiten der verschiedenen Auflösungs- und Fällungsschritte, durchgeführt werden.

Beispielsweise kann in eine, vorzugsweise konzentrierte, Natronlauge solange Kohlendioxid eingeblasen werden, bis der pH-Wert der Lösung signifikant abfällt, vorzugsweise jedoch nicht unter einen pH von 11,5. Dabei fällt vorzugsweise Soda aus, welches, gegebenenfalls gemeinsam mit weiterem Kohlendioxid, in dem Carbonatfällungsschritt zugesetzt werden kann.

In einer weiteren bevorzugten Ausführungsform wird ein Teil des Natriumcarbonats und/oder Natriumbicarbonats getrennt von der Carbonatfällung erzeugt, während ein anderer Teil in situ erzeugt wird.

Bei einer bevorzugten Ausführungsform enthält das Sulfatfällungsprodukt Calciumsulfat, wobei aus dem Calciumsulfat weiteres Calciumoxid hergestellt wird. Bei dieser Ausführungsform des Verfahrens werden vorzugsweise die folgenden Schritte durchgeführt:
Ausfällen eines Magnesiumhydroxid und Calciumsulfat enthaltenden Sulfatfällungsproduktes aus der Sole durch Zugabe von Calciumoxid und/oder Calciumhydroxid als Fällungsreagens,
Lösen von Magnesiumionen aus dem Sulfatfällungsprodukt mit einem, vorzugsweise Schwefelsäure enthaltenden, Lösungsmittel, wobei ein Calciumsulfat enthaltender Feststoff und eine Magnesiumionen enthaltende Lösung gebildet wird,
Herstellen von Calciumoxid aus dem Calciumsulfat enthaltenden Feststoff.

Durch die chemische Umwandlung von Calciumsulfat in Calciumoxid kann aus dem vergleichsweise minderwertigen Produkt Calciumsulfat (Gips) ein hochwertiges Nebenprodukt hergestellt werden, das auch als Fällungsreagens zum Ausfällen des Sulfatfällungsproduktes verwendbar ist. Zugleich wird die Produktion von Abfällen verringert, da das Sulfatfällungsprodukt, im Gegensatz zu den Soleenthärtungsrückständen der bekannten Verfahren, vollständig verwertet werden kann. Als Nebenprodukt wird vorzugsweise Calciumhydroxid oder Kalkmilch hergestellt, welche durch Löschen von Calciumoxid mit Wasser erzeugt werden können.

Vorzugsweise wird das Sulfatfällungsprodukt mithilfe einer Abscheidevorrichtung, wie einem Absetzbehälter und/oder einer Filterpresse von der Sole abgetrennt. Das von der Sole abgetrennte Sulfatfällungsprodukt kann neben Magnesiumhydroxid und Calciumsulfat auch Calciumhydroxid, Calciumcarbonat und/oder Natriumchlorid enthalten. Vorzugsweise wird das von der Sole abgetrennte Sulfatfällungsprodukt durch, vorzugsweise mehrstufiges, Auswaschen von an dem Sulfatfällungsprodukt anhaftender natriumchloridhaltiger Sole befreit. Zum Auswaschen wird vorzugsweise Wasser verwendet. Das Wasser ist vorzugsweise ein beim Eindampfen der Reinsole zur Gewinnung von Natriumchlorid oder anderen Salzen gewonnenes Kondensat.

Das gewaschene Sulfatfällungsprodukt wird vorzugsweise mit wässriger Schwefelsäure umgesetzt, um, vorzugsweise unter Auflösung bzw. Neutralisierung von Magnesiumhydroxid, einen Calciumsulfat enthaltenden Feststoff und eine Magnesiumionen enthaltende Lösung zu erhalten. Vorzugsweise besteht der Calciumsulfat enthaltende Feststoff im Wesentlichen aus Gips (CaSO₄**n*H₂O).

Vorzugsweise wird der Calciumsulfat enthaltende Feststoff mithilfe einer Abscheidevorrichtung, wie einem Absetzbehälter und/oder einer Filterpresse von der Magnesiumionen enthaltenden Lösung getrennt. Vorzugsweise wird der abgetrennte Calciumsulfat enthaltende Feststoff, vorzugsweise mit Wasser, gewaschen und getrocknet. Das Wasser ist vorzugsweise ein beim Eindampfen der Reinsole zur Gewinnung von Natriumchlorid oder anderen Salzen gewonnenes Kondensat. Der gewaschene und getrocknete Calciumsulfat enthaltende Feststoff bzw. Gips bildet vorzugsweise ein Nebenprodukt mit hoher Reinheit, das vorzugsweise eine ähnliche Qualität wie REA-Gips aus Rauchgasentschwefelungsanlagen aufweist und beispielsweise in der Zement-, oder Gipsindustrie verwendet werden kann, zum Beispiel zur Herstellung von Gipskartonplatten oder als Spezialgips. Der Gips kann dabei ebenfalls je nach Trocknungstemperatur als Anhydrit (CaSO₄), Halbhydrat (CaSO₄*0,5H₂O, Baugips) oder Dihydrat (CaSO₄*2H₂O) erhalten werden.

Das Herstellen von Calciumoxid aus dem Calciumsulfat enthaltenden Feststoff erfolgt vorzugsweise mittels Gipshydrolyse. Alternativ kann das Herstellen von Calciumoxid auch durch chemische Reduktion, wie beispielsweise im Müller-Kühne-Verfahren, oder durch elektrochemische Spaltung erfolgen. Das erhaltene Calciumoxid kann, vorzugsweise nach Löschen mit Wasser, wobei Calciumhydroxid erhalten wird, als Fällungsreagens für die Sulfatfällung verwendet werden.

Als weitere Alternative kann Calciumsulfat mit einer Base, beispielsweise Natriumhydroxid, versetzt werden, um Calciumhydroxid auszufällen. Das ausgefällte Calciumhydroxid kann als Fällungsreagens für die Sulfatfällung verwendet werden.

Bei einer bevorzugten Ausführungsform wird das aus dem Calciumsulfat enthaltenden Feststoff hergestellte Calciumoxid, vorzugsweise nach Umsetzung des Calciumoxids zu Calciumhydroxid, als Fällungsreagens zum Ausfällen des Sulfatfällungsproduktes verwendet. Die Umsetzung von Calciumoxid zu Calciumhydroxid erfolgt vorzugsweise durch Löschen mit Wasser.

Durch die Verwendung des aus dem Calciumsulfat enthaltenden Feststoff hergestellten Calciumoxids als Fällungsreagens im Sulfatfällungsschritt entsteht ein Kreislaufprozess. So kann einerseits der Zukauf von Hilfsstoffen, insbesondere von Kalk, minimiert, und andererseits die Produktion von Reststoffen vermieden werden, da der Calciumsulfat enthaltende Feststoff wenigstens teilweise verwertet wird. Vorzugsweise wird nur ein Teil des Calciumsulfat enthaltenden Feststoffs zu Calciumoxid umgesetzt, während ein anderer Teil als Gips verkauft werden kann. So kann der Calciumsulfat enthaltende Feststoff vollständig verwertet werden.

Vorzugsweise können das aus dem Carbonatfällungsprodukt hergestellte Calciumoxid und das aus dem Calciumsulfat enthaltenden Feststoff hergestellte Calciumoxid gemeinsam den Bedarf an Calciumoxid für den Sulfatfällungsschritt decken. Somit kann auf den Zukauf von externem Kalk vorzugsweise gänzlich verzichtet werden, wodurch Kosten gespart werden können und die Abhängigkeit von externen Rohstofflieferketten reduziert werden kann. Außerdem ist so eine vollständige Kreislaufführung des Kalks möglich, was auch der Vermeidung von Reststoffen dient.

Bei einer bevorzugten Ausführungsform wird aus dem Calciumsulfat enthaltenden Feststoff zusätzlich Schwefelsäure hergestellt.

Für das Lösen von Magnesiumionen aus dem Sulfatfällungsprodukt wird vorzugsweise Schwefelsäure verwendet. Um den Bedarf an zugekauften Hilfsstoffen zu minimieren, ist es daher vorteilhaft, wenn die Schwefelsäure durch das erfindungsgemäße Verfahren selbst herstellbar ist.

Durch mehrere der erfindungsgemäßen Verfahren zur Herstellung von Calciumoxid aus dem Calciumsulfat enthaltenden Feststoff, wie beispielsweise dem Müller-Kühne-Verfahren, oder insbesondere der Gipshydrolyse, wird als weiteres Produkt Schwefelsäure erhalten. Die Schwefelsäure wird vorzugsweise in marktüblicher Qualität erhalten und kann verkauft werden.

Vorzugsweise erfolgt die Gipshydrolyse durch Erhitzen des Calciumsulfat enthaltenden Feststoffs. Dabei entstehen vorzugsweise neben Calciumoxid auch Schwefeloxide, wie Schwefeltrioxid und/oder Schwefeldioxid. Aus den Schwefeloxiden kann durch bekannte Verfahren Schwefelsäure hergestellt werden. Vorzugsweise wird dafür das Kontaktverfahren oder das Doppelkontaktverfahren angewandt.

Die Spaltung von Calciumsulfat (Gips) in Calciumoxid und Schwefeloxide kann thermisch durch Erhitzung, vorzugsweise auf über 1450 °C, erfolgen. Bevorzugt erfolgt die Spaltung katalytisch bei deutlich niedrigeren Temperaturen. Dadurch kann der Energieaufwand und der Bedarf an teuren Feuerfestmaterialien verringert werden. Vorzugsweise erfolgt die Spaltung von Calciumsulfat durch Erhitzung des Calciumsulfats, welches vorzugweise in feiner Pulverform vorliegt. Die Erhitzung erfolgt vorzugsweise durch Heißluft, welche vorzugsweise durch elektrische Energie erhitzt wird.

Alternativ kann Magnesiumsulfat durch eine Reaktion von Schwefeltrioxid mit dem Sulfatfällungsprodukt in Anwesenheit von Wasser gewonnen werden. Beispielsweise kann eine direkte Einleitung von Schwefeltrioxid in eine wässrige Lösung oder Suspension des Sulfatfällungsproduktes durchgeführt werden, um Magnesiumhydroxid aus dem Sulfatfällungsprodukt mit Schwefeltrioxid und Wasser direkt zu Magnesiumsulfat umzusetzen.

Bei einer bevorzugten Ausführungsform ist zumindest ein Teil der aus dem Calciumsulfat enthaltenden Feststoff hergestellten Schwefelsäure in dem Lösungsmittel zum Lösen von Magnesiumionen aus dem Sulfatfällungsprodukt enthalten.

Durch die Eigenproduktion von Schwefelsäure kann der Bedarf an zugekauften Hilfsstoffen weiter gesenkt werden, wodurch Kosten optimiert und die Abhängigkeit von externen Rohstofflieferanten verringert werden kann.

Bevorzugt kann sämtliche zum Lösen der Magnesiumionen aus dem Sulfatfällungsprodukt benötigte Schwefelsäure durch das erfindungsgemäße Verfahren hergestellt werden. Mehr bevorzugt wird sogar ein Überschuss an Schwefelsäure erzeugt, der verkauft werden kann.

Bei einer bevorzugten Ausführungsform wird aus der Magnesiumionen enthaltenden Lösung ein Magnesiumsulfat-Hydrat und/oder wasserfreies Magnesiumsulfat hergestellt.

Die Magnesiumionen enthaltende Lösung enthält vorzugsweise auch Sulfat, sodass daraus Magnesiumsulfat gewonnen werden kann. Das Gewinnen von Magnesiumsulfat aus der Lösung erfolgt vorzugsweise durch Eindampfen und Kühlen, wobei Magnesiumsulfat, vorzugsweise in Form eines Hydrats, auskristallisiert. Das gewonnene Magnesiumsulfat oder Magnesiumsulfat-Hydrat wird vorzugsweise getrocknet und stellt vorzugsweise ein reines, hochwertiges Nebenprodukt dar, das verkauft werden kann.

Vorzugsweise wird aus der Magnesium- und Sulfationen enthaltenden Lösung Magnesiumsulfat in Form von Bittersalz (MgSO₄*7H₂O) gewonnen, welches durch Variation der Trocknungstemperatur unter anderem auch als Monohydrat (MgSO₄*H₂O, synthetischer Kieserit) oder wasserfreies Magnesiumsulfat (MgSO₄) erhalten werden kann.

Gemäß einer bevorzugten Ausführungsform wird für das Ausfällen des Calciumcarbonat enthaltenden Carbonatfällungsproduktes aus der Sole Kohlendioxid (CO₂) und/oder ein aus Kohlendioxid hergestelltes Carbonat als Fällungsreagens verwendet.

Das Kohlendioxid kann aus einem Verbrennungsprozess und/oder aus einer anderen chemischen Reaktion, beispielsweise der Entsäuerung von Carbonaten, stammen. Die Entsäuerung von Carbonaten findet beispielsweise bei der Herstellung von Kalk oder Zement aus Calciumcarbonat statt. In bekannten Verfahren zum Gewinnen von Natriumchlorid aus einer Sole, insbesondere bei der Siedesalzgewinnung, wird die Sole eingedampft, um daraus Natriumchlorid oder andere Salze auszukristallisieren. Da die dafür benötigte thermische Energie normalerweise wenigstens teilweise durch Verbrennung von kohlenstoffhaltigen Materialien, insbesondere von fossilen Energieträgern, wie Erdgas, bereitgestellt wird, werden bei der Gewinnung von Natriumchlorid üblicherweise große Mengen an CO₂ erzeugt.

Durch die Verwendung von CO₂ als Fällungsreagens kann die Netto-CO₂-Bilanz des hergestellten Natriumchlorids verringert werden und im Prozess anfallendes CO₂ effektiv verwertet werden. Zusätzlich oder alternativ kann auch CO₂ aus externen Quellen verwendet werden, wodurch die Möglichkeit zu Negativemissionen und folglich zum Verkauf von CO₂-Zertifikaten geschaffen werden kann. Vorzugsweise wird das als Fällungsreagens verwendete CO₂ entweder in reiner Form, in Form eines Abgases, einer Abluft, oder in Form eines Carbonates der Sole zugegeben. Das Carbonat kann durch Reaktion von CO₂ mit einer beliebigen Base, beispielsweise mit Natronlauge, hergestellt werden. Das Abgas kann ein Verbrennungsabgas oder ein Abgas eines anderen CO₂-erzeugenden Prozesses, wie beispielsweise der Entsäuerung von Carbonaten, sein.

Gemäß einer bevorzugten Ausführungsform weist das Calciumcarbonat des Carbonatfällungsproduktes eine Korngröße von maximal 300 µm, bevorzugt von maximal 200 µm, mehr bevorzugt von maximal 100 µm auf. Die Korngröße von Calciumcarbonat kann mittels Laserbeugung, beispielsweise gemäß der Norm ISO 13320 bestimmt werden. Alternativ kann die Korngröße durch dynamische Bildanalyse nach ISO 13322-2 oder durch dynamische Lichtstreuung nach ISO 22412 gemessen werden.

Das entsprechend feinkörnige Calciumcarbonat entsteht vorzugsweise während der Carbonatfällung. Vorzugsweise ist dieses Calciumcarbonat feinkörniger als ein Calciumcarbonat, das durch Brechen und Mahlen von natürlich vorkommendem Kalkstein erzeugt wurde. Durch die feine Körnung des Calciumcarbonats hat dieses eine besonders hohe Oberfläche und eine entsprechend hohe Reaktivität, was zu einer besonders schnellen Umsetzung des Calciumcarbonats zu Calciumoxid führen kann.

Gemäß einer bevorzugten Ausführungsform wird zum Herstellen von Calciumoxid aus dem Carbonatfällungsprodukt ein Gas-Feststoff-Verwirbelungsverfahren verwendet.

Als Gas-Feststoff-Verwirbelungsverfahren wird im Kontext dieser Offenbarung ein Verfahren bezeichnet, bei dem ein, vorzugsweise pulverförmiger, Feststoff, in einem Gasstrom verwirbelt wird. Darunter fallen beispielsweise Flugstromverfahren oder Wirbelschichtverfahren. Gas-Feststoff-Verwirbelungsverfahren zeichnen sich durch eine besonders gute Durchmischung von Gas und Feststoff aus, wodurch ein besonders guter Stoff- und Wärmeübergang erzielt werden kann. Daher kann mithilfe eines Gas-Feststoff-Verwirbelungsverfahrens eine besonders schnelle und energieeffiziente Umsetzung von Calciumcarbonat zu Calciumoxid erreicht werden.

Bei dem Gas-Feststoff-Verwirbelungsverfahren wird das pulverförmige, vorzugsweise getrocknete, Carbonatfällungsprodukt vorzugsweise in einem Gasstrom dispergiert. Das Pulver wird dabei vorzugsweise in dem Gasstrom verwirbelt.

Vorzugsweise wird das in dem Gasstrom dispergierte Carbonatfällungsprodukt, vorzugsweise von unten nach oben, in einen Kalzinierungsofen eingebracht. Im Kalzinierungsofen findet vorzugsweise eine Entsäuerung des Calciumcarbonats unter Bildung von Calciumoxid und einer CO₂-haltigen Abluft statt. Bevorzugt folgt auf die Entsäuerung ein Abscheideschritt mithilfe eines Zyklons und/oder eines Filters, wobei das Calciumoxid von der CO₂-haltigen Abluft getrennt wird.

Die CO₂-haltige Abluft kann teilweise in den Dispergierschritt rückgeführt werden. Damit wird der Bedarf an Außenluft verringert und so der CO₂-Gehalt der Abluft erhöht.

Die CO₂-haltige Abluft wird vorzugsweise teilweise oder vollständig einer Wärmerückgewinnungseinheit, beispielsweise einem Wärmetauscher, zugeführt, um der Abluft Wärme zu entziehen. Die so gewonnene Wärme kann beispielsweise für die Vorwärmung der Trocknungsluft, zur Erwärmung eines anderen Gasstroms, oder für andere Zwecke verwendet werden.

Gemäß einer bevorzugten Ausführungsform wird die zum Herstellen von Calciumoxid aus dem Carbonatfällungsprodukt benötigte thermische Energie im Wesentlichen durch elektrische Energie bereitgestellt.

Durch die elektrische Erzeugung von thermischer Energie können CO₂-Emissionen verringert oder, insbesondere bei Verwendung von erneuerbarer elektrischer Energie, sogar gänzlich vermieden werden. Dadurch wird das Verfahren insgesamt nachhaltiger und der CO₂-Fußabdruck der erzeugten Produkte wird verkleinert. Vorzugsweise wird der Kalzinierungsofen elektrisch beheizt.

Gemäß einer bevorzugten Ausführungsform wird beim Herstellen von Calciumoxid aus dem Carbonatfällungsprodukt gebildetes Kohlendioxid, gegebenenfalls nach vorheriger Umsetzung wenigstens eines Teils des Kohlendioxids zu einem Carbonat, als Fällungsreagens zum Ausfällen des Carbonatfällungsproduktes verwendet.

Gemäß einer bevorzugten Ausführungsform wird beim Gewinnen von Natriumchlorid aus der im Wesentlichen von Calciumionen befreiten Sole im Wesentlichen kein Kohlendioxid erzeugt, vorzugsweise wobei die zum Gewinnen von Natriumchlorid aus der im Wesentlichen von Calciumionen befreiten Sole benötigte thermische Energie aus erneuerbaren Quellen stammt.

Die thermische Energie für die Gewinnung von Natriumchlorid, insbesondere für das Salzsieden, wird vorzugsweise elektrisch bereitgestellt. Vorzugsweise wird dafür eine Wärmepumpe verwendet.

Wenn bei der Gewinnung von Natriumchlorid kein CO₂ bzw. CO₂-haltiges Abgas erzeugt wird, fehlt dieses als Fällungsreagens für die Carbonatfällung und/oder als Reagens zur Herstellung von Natriumcarbonat und/oder Natriumbicarbonat. Daher ist es in diesem Fall besonders vorteilhaft, wenn aus dem Carbonatfällungsprodukt Calciumoxid hergestellt wird, weil das dabei gebildete CO₂ dann das bei der Beheizung des Salzsiedeprozesses erzeugte CO₂ ersetzen kann. So kann ein Prozess ohne CO₂-Emissionen verwirklicht werden, wobei vorzugsweise trotzdem genug CO₂ für die Carbonatfällung zur Verfügung steht.

Vorzugsweise wird die Rohsole durch das erfindungsgemäße Verfahren derart aufbereitet, dass Magnesiumsulfat und Gips als verkäufliche Nebenprodukte gewonnen werden. Dies kann insbesondere durch eine separate Abtrennung des Sulfatfällungsproduktes und des Carbonatfällungsproduktes von der Sole erreicht werden.

Vorzugsweise werden auch die für die Fällungsschritte benötigten Hilfsstoffe Kalk und Soda, sowie die weitere Basischemikalie Schwefelsäure allesamt aus der Rohsole bzw. aus Fällungsprodukten in Wiederverwertungskreisläufen gewonnen. Durch Elektrolyse von Natriumchlorid aus der Reinsole können die benötigte Natronlauge, sowie vorzugsweise als Nebenprodukte Wasserstoff und Chlor gewonnen werden.

Vorzugsweise kann das im erfindungsgemäßen Verfahren, insbesondere beim Kalkbrennen, anfallende CO₂ im Wesentlichen vollständig im Solereinigungsprozess wiederverwertet werden und somit eine im Wesentlichen CO₂-freie Herstellung von Natriumchlorid erreicht werden. Die für die erfindungsgemäße CO₂-freie, also ohne Verursachung von CO₂-Emissionen erfolgende, Herstellung von Natriumchlorid benötigte elektrische Energie stammt vorzugsweise im Wesentlichen vollständig aus erneuerbaren Quellen. Vorzugsweise wird die elektrische Energie durch Wind-, Wasser- oder Photovoltaikanlagen im Rahmen des erfindungsgemäßen Verfahrens selbst produziert.

Durch die umfangreiche Ausnutzung der Inhaltsstoffe in der Rohsole bzw. im anfallenden Soleenthärtungsrückstand kommt das erfindungsgemäße Verfahren vorzugsweise gänzlich ohne Zukauf von Kalk und Soda aus. Wenn auch die benötigte Schwefelsäure selbst hergestellt wird, kann die Abhängigkeit des erfindungsgemäßen Verfahrens zum Gewinnen von Natriumchlorid von externen Rohstofflieferanten auf ein Minimum reduziert werden. Durch die Kombination dieser Maßnahmen kann ein in der Salzproduktion bislang unerreichtes Ausmaß an Unabhängigkeit und Krisensicherheit ermöglicht werden.

Die erfindungsgemäße Vorrichtung zum Gewinnen von Natriumchlorid aus einer Calciumionen enthaltenden Sole umfasst
einen Carbonatfällungsreaktor zum Ausfällen eines Calciumcarbonat enthaltenden Carbonatfällungsproduktes aus der Sole mit Natriumcarbonat und/oder Natriumbicarbonat als Fällungsreagens,
eine Salzsiedeanlage zum Gewinnen von Natriumchlorid aus der im Wesentlichen von Calciumionen befreiten Sole,
einen Elektrolyseur zum Herstellen von Natriumhydroxid durch Elektrolyse von Natriumchlorid,
einen Sodareaktor zum Herstellen von Natriumcarbonat und/oder Natriumbicarbonat durch Umsetzen des Natriumhydroxids mit Kohlendioxid,
wobei das durch Umsetzen des Natriumhydroxids mit Kohlendioxid hergestellte Natriumcarbonat und/oder Natriumbicarbonat wenigstens teilweise als Fällungsreagens zum Ausfällen des Carbonatfällungsproduktes verwendet wird.

Bei einer bevorzugten Ausführungsform weist die Vorrichtung eine Kalkbrenneinheit auf, sodass aus dem Carbonatfällungsprodukt Calciumoxid herstellbar ist.

Gemäß einer bevorzugten Ausführungsform ist eine leitungsmäßige Verbindung zum Überführen von Kohlendioxid aus der Kalkbrenneinheit in den Sodareaktor vorgesehen, sodass das beim Herstellen von Calciumoxid aus dem Carbonatfällungsprodukt gebildete Kohlendioxid wenigstens teilweise zum Herstellen des Natriumcarbonats und/oder Natriumbicarbonats verwendbar ist.

Bei einer bevorzugten Ausführungsform weist die Vorrichtung einen Sulfatfällungsreaktor zum Ausfällen eines Magnesiumhydroxid und/oder Calciumsulfat enthaltenden Sulfatfällungsproduktes aus der Sole auf, wobei eine leitungsmäßige Verbindung und/oder eine Fördereinrichtung zwischen der Kalkbrenneinheit und dem Sulfatfällungsreaktor vorgesehen ist, sodass Calciumoxid aus der Kalkbrenneinheit, vorzugsweise nach Umsetzung des Calciumoxids zu Calciumhydroxid, als Fällungsreagens zum Ausfällen des Sulfatfällungsproduktes verwendbar ist.

Vorzugsweise ist das Sulfatfällungsprodukt separat von dem Carbonatfällungsprodukt von der Sole abtrennbar. Der Carbonatfällungsreaktor und der Sulfatfällungsreaktor können sowohl als getrennte Behälter, als auch als ein einziger Behälter ausgebildet sein. Wenn die beiden Reaktoren durch einen einzigen Behälter gebildet sind, erfolgt die Sulfatfällung und die Carbonatfällung vorzugsweise nacheinander, wobei zwischen den beiden Fällungsschritten das jeweilige Fällungsprodukt aus dem Behälter entfernt wird.

13. Vorrichtung nach einem der Ansprüche 9 bis 12, dadurch gekennzeichnet, dass eine leitungsmäßige Verbindung und/oder eine Fördereinrichtung zwischen der Salzsiedeanlage und dem Elektrolyseur vorgesehen ist, sodass aus der im Wesentlichen von Calciumionen befreiten Sole gewonnenes Natriumchlorid zum Herstellen von Natriumhydroxid verwendbar ist.

Gemäß einer bevorzugten Ausführungsform ist eine leitungsmäßige Verbindung und/oder eine Fördereinrichtung zwischen der Salzsiedeanlage und dem Elektrolyseur vorgesehen, sodass aus der im Wesentlichen von Calciumionen befreiten Sole gewonnenes Natriumchlorid zum Herstellen von Natriumhydroxid verwendbar ist. Die besagte Fördereinrichtung kann zur Förderung von festem Natriumchlorid oder zur Förderung von flüssiger Sole ausgebildet sein. In zweiterem Fall ist die Sole direkt dem Elektrolyseur zuführbar.

Gemäß einer bevorzugten Ausführungsform ist der Carbonatfällungsreaktor zugleich auch als Sodareaktor verwendbar, wobei Kohlendioxid und Natriumhydroxid dem Carbonatfällungsreaktor separat zuführbar sind und in situ zu Natriumcarbonat und/oder Natriumbicarbonat reagieren können, welches mit Calciumionen aus der Sole weiter zu Calciumcarbonat reagieren kann.

Gemäß einer bevorzugten Ausführungsform ist der Sodareaktor als ein vom Carbonatfällungsreaktor verschiedener Behälter ausgeführt, sodass das Herstellen von Natriumcarbonat und/oder Natriumbicarbonat räumlich getrennt vom Ausfällen des Carbonatfällungsproduktes aus der Sole durchführbar ist.

Bei einer bevorzugten Ausführungsform enthält das Sulfatfällungsprodukt Calciumsulfat und die Vorrichtung weist einen Umwandlungsreaktor zur Herstellung von Calciumoxid aus dem Calciumsulfat auf.

Bei dieser Ausführungsform weist die Vorrichtung vorzugsweise
einen Lösereaktor zum Lösen von Magnesiumionen aus dem Sulfatfällungsprodukt mit einem, vorzugsweise Schwefelsäure enthaltenden, Lösungsmittel, wobei ein Calciumsulfat enthaltender Feststoff und eine Magnesiumionen enthaltende Lösung gebildet wird; und
einen Umwandlungsreaktor zur Herstellung von Calciumoxid aus dem Calciumsulfat enthaltenden Feststoff auf.

Der Umwandlungsreaktor weist vorzugsweise ein senkrechtes Rohr auf, in welchem die Gipshydrolyse, also die Spaltung von Calciumsulfat in Calciumoxid und Schwefeloxide, durchführbar ist.

Bei einer bevorzugten Ausführungsform ist eine leitungsmäßige Verbindung und/oder eine Fördereinrichtung zwischen dem Umwandlungsreaktor und dem Sulfatfällungsreaktor vorgesehen, sodass Calciumoxid aus dem Umwandlungsreaktor, vorzugsweise nach vorheriger Umwandlung zu Calciumhydroxid, als Fällungsreagens zum Ausfällen des Sulfatfällungsproduktes verwendbar ist.

Bei einer bevorzugten Ausführungsform umfasst die Vorrichtung eine Schwefelsäureherstellungseinheit zum Herstellen von Schwefelsäure aus dem Calciumsulfat enthaltenden Feststoff.

Bei einer bevorzugten Ausführungsform ist eine leitungsmäßige Verbindung zwischen der Schwefelsäureherstellungseinheit und dem Lösereaktor vorgesehen, sodass die aus dem Calciumsulfat enthaltenden Feststoff hergestellte Schwefelsäure dem Lösungsmittel zum Lösen von Magnesiumionen aus dem Sulfatfällungsprodukt zuführbar ist.

Gemäß einer bevorzugten Ausführungsform weist die Kalkbrenneinheit einen Gas-Feststoff-Verwirbelungsreaktor auf. Der Gas-Feststoff-Verwirbelungsreaktor kann beispielsweise ein Flugstromreaktor oder ein Wirbelschichtreaktor sein.

Vorzugsweise ist der Gas-Feststoff-Verwirbelungsreaktor ein Flugstromreaktor. Mit einem Wirbelschichtreaktor könnten zwar längere Kontaktzeiten und damit theoretisch ein höherer Umsatz erreicht werden, dem stehen jedoch die höheren Kosten eines Wirbelschichtreaktors, insbesondere durch den höheren Energieaufwand, entgegen. Vorzugsweise beträgt die Temperatur in dem Flugstromreaktor mehr als 1000 °C, sodass in dem Flugstromreaktor eine Umsetzung von mindestens 90 %, vorzugsweise von mindestens 95 % des Calciumcarbonats zu Calciumoxid erreicht werden kann. Der Wirbelschichtreaktor ist vorzugsweise als einfaches Rohr ausgeführt, welches leicht und günstig getauscht werden kann, wenn es, beispielsweise aufgrund von Korrosion, das Ende seiner Lebensdauer erreicht hat.

Gemäß einer bevorzugten Ausführungsform ist die Kalkbrenneinheit elektrisch beheizbar.

Gemäß einer bevorzugten Ausführungsform ist eine leitungsmäßige Verbindung zum Rückführen von Kohlendioxid aus der Kalkbrenneinheit, gegebenenfalls nach vorheriger Umsetzung wenigstens eines Teils des Kohlendioxids zu einem Carbonat, in den Carbonatfällungsreaktor vorgesehen

Gemäß einer bevorzugten Ausführungsform wird die Salzsiedeanlage mit erneuerbarer Energie beheizt, vorzugsweise mithilfe einer Wärmepumpe, wobei im Wesentlichen kein Kohlendioxid erzeugt wird. Erzeugtes Kohlendioxid umfasst in diesem Zusammenhang kein Kohlendioxid, das bei der Erzeugung von elektrischer Energie anfällt, welche zum Betrieb der Wärmepumpe aus einem Stromnetz bezogen wird.

Die oben in Zusammenhang mit dem erfindungsgemäßen Verfahren zum Gewinnen von Natriumchlorid beschriebenen Merkmale, technischen Effekte und Vorteile sind entsprechend auf die erfindungsgemäße Vorrichtung zum Gewinnen von Natriumchlorid übertragbar.

Sofern nicht anders angegeben, beziehen sich alle Prozentangaben und relativen Angaben von Anteilen in der vorliegenden Offenbarung auf Massenprozent bzw. Massenanteile.

"Senkrecht" oder "vertikal" bedeutet im Rahmen dieser Offenbarung, sofern nichts anderes angegeben ist, im Wesentlichen in Richtung der Schwerkraft; "waagrecht" oder "horizontal" bedeutet, sofern nichts anderes angegeben ist, im Wesentlichen orthogonal zur Schwerkraft.

Die Erfindung wird nachstehend anhand eines bevorzugten Ausführungsbeispiels in den Zeichnungen weiter erläutert.

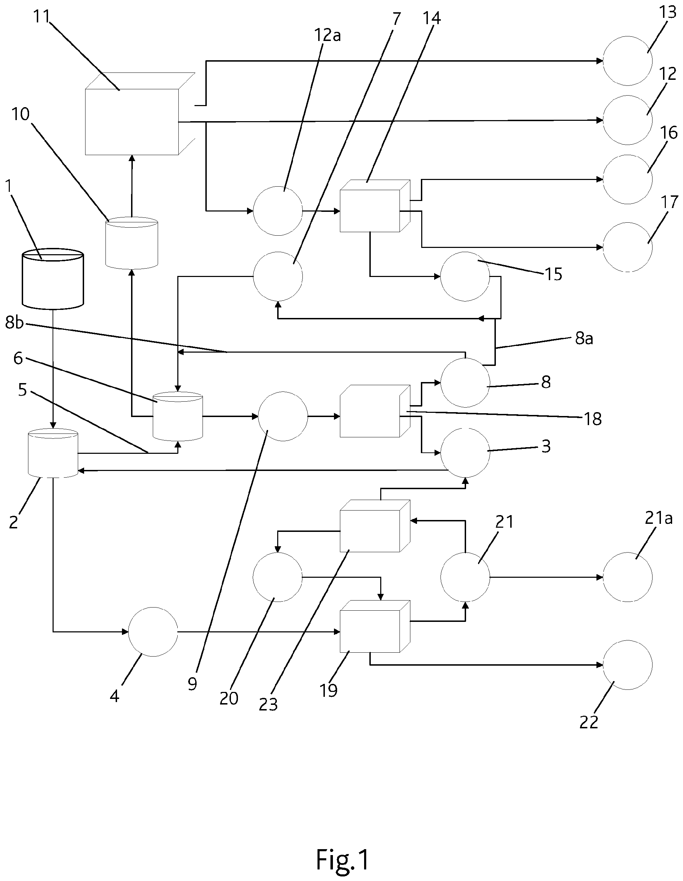

Fig. 1 zeigt ein Fließschema eines beispielhaften erfindungsgemäßen Verfahrens, welches in keiner Weise als einschränkend zu verstehen ist.

Das in Fig. 1 schematisch dargestellte Verfahren verwendet eine bergmännisch gewonnene Rohsole 1 als Ausgangsprodukt. Die Rohsole 1 wird in einem Sulfatfällungsschritt 2 durch Zugabe von Kalk 3, vorzugsweise in Form von Kalkmilch, unter Ausfällung eines Sulfatfällungsproduktes 4, das Magnesiumhydroxid und Calciumsulfat enthält, von Magnesium- und Calciumionen befreit, um eine Halbreinsole 5 zu erhalten. Die Halbreinsole 5 wird in einem Carbonatfällungsschritt 6 durch Zugabe von Soda 7 und Kohlendioxid 8, unter Ausfällung eines Carbonatfällungsproduktes 9, das Calciumcarbonat enthält, von Calcium- und Carbonationen befreit, um eine Reinsole 10 zu erhalten. Aus der Reinsole 10 wird in einer Salzsiedeanlage 11 durch Eindampfen und Auskristallisieren Natriumchlorid 12 als Hauptprodukt gewonnen. Durch weitere Mutterlaugenverarbeitung kann in der Salzsiedeanlage 11 optional als Nebenprodukt Kaliumsulfat 13 aus der Reinsole 10 gewonnen werden.

Ein Teil 12a des Natriumchlorids wird durch Chlor-Alkali-Elektrolyse 14 zu Natronlauge 15 umgesetzt, wobei als Nebenprodukte Wasserstoff 16 und Chlor 17 entstehen. Aus in dem Carbonatfällungsprodukt 9 enthaltenem Calciumcarbonat werden in einem Kalkofen 18 Kalk 3 und Kohlendioxid 8 hergestellt. Der Kalk 3 wird als Fällungsreagens dem Sulfatfällungsschritt 2 zugeführt. Der Kalk 3 verlässt den Kalkofen in Form von Calciumoxid und wird vorzugsweise durch Löschen mit Wasser und/oder einer Sole zu Kalkmilch umgesetzt, welche vorzugsweise für den Sulfatfällungsschritt 2 verwendet wird. Ein erster Teil 8a des im Kalkofen 18 entstandenen Kohlendioxids 8 wird mit der Natronlauge 15 vermischt, um Soda 7 zu erhalten, wobei vorzugsweise ein stöchiometrischer Überschuss an Natronlauge 15 zugegeben wird. Ein zweiter Teil 8b des im Kalkofen 18 entstandenen Kohlendioxids 8 wird gemeinsam mit dem Soda 7, und vorzugsweise dem Überschuss an Natronlauge 15, dem Carbonatfällungsschritt 6 zugeführt.

Das Sulfatfällungsprodukt 4 wird in einer Bittersalzanlage 19 mit Schwefelsäure 20 versetzt, um festes Calciumsulfat 21 und eine magnesiumsulfathaltige Lösung zu erhalten, aus welcher durch Eindampfen und Auskristallisieren Bittersalz 22 als Nebenprodukt gewonnen wird. Ein Teil 21a des Calciumsulfats wird als Nebenprodukt verkauft. Der Rest des Calciumsulfats 21 wird mittels Gipshydrolyse 23 in Kalk 3 in Form von Calciumoxid und Schwefeloxide aufgespalten. Die Schwefeloxide Schwefeldioxid und Schwefeltrioxid werden zu Schwefelsäure 20 umgesetzt, die in die Bittersalzanlage 19 rezirkuliert wird.

## Patentansprüche

1. Verfahren zum Gewinnen von Natriumchlorid (12) aus einer Calciumionen enthaltenden Sole mit den Schritten:
a) Ausfällen eines Calciumcarbonat enthaltenden Carbonatfällungsproduktes (9) aus der Sole mit Natriumcarbonat und/oder Natriumbicarbonat als Fällungsreagens,
b) Gewinnen von Natriumchlorid (12) aus der im Wesentlichen von Calciumionen befreiten Sole,
c) Herstellen von Natriumhydroxid durch Elektrolyse von Natriumchlorid (12),
d) Herstellen von Natriumcarbonat und/oder Natriumbicarbonat durch Umsetzen des Natriumhydroxids mit Kohlendioxid (8), wobei das Kohlendioxid (8) wenigstens teilweise aus dem Verfahren zum Gewinnen von Natriumchlorid (12) stammt,
wobei das durch Umsetzen des Natriumhydroxids mit Kohlendioxid (8) hergestellte Natriumcarbonat und/oder Natriumbicarbonat wenigstens teilweise als Fällungsreagens zum Ausfällen des Carbonatfällungsproduktes (9) verwendet wird.

2. Verfahren nach Anspruch 1, **dadurch gekennzeichnet, dass** aus dem Carbonatfällungsprodukt (9) Calciumoxid hergestellt wird, wobei Kohlendioxid (8) gebildet wird.

3. Verfahren nach Anspruch 2, **dadurch gekennzeichnet, dass** das beim Herstellen von Calciumoxid aus dem Carbonatfällungsprodukt (9) gebildete Kohlendioxid (8) wenigstens teilweise zum Herstellen des Natriumcarbonats und/oder Natriumbicarbonats verwendet wird.

4. Verfahren nach Anspruch 2 oder 3, **dadurch gekennzeichnet, dass** in einem Sulfatfällungsschritt (2) ein Magnesiumhydroxid und/oder Calciumsulfat enthaltendes Sulfatfällungsprodukt (4) aus der Sole ausgefällt wird, wobei aus dem Carbonatfällungsprodukt (9) hergestelltes Calciumoxid, vorzugsweise nach Umsetzung des Calciumoxids zu Calciumhydroxid, als Fällungsreagens verwendet wird.

5. Verfahren nach einem der Ansprüche 1 bis 4, **dadurch gekennzeichnet, dass** das zum Herstellen des Natriumcarbonats und/oder Natriumbicarbonats verwendete Kohlendioxid (8) wenigstens teilweise durch Verbrennung von kohlenstoffhaltigen Stoffen zum Zwecke der Wärmeerzeugung für das Gewinnen von Natriumchlorid (12) aus der im Wesentlichen von Calciumionen befreiten Sole erzeugt wird.

6. Verfahren nach einem der Ansprüche 1 bis 5, **dadurch gekennzeichnet, dass** das zum Herstellen von Natriumhydroxid verwendete Natriumchlorid (12) aus der im Wesentlichen von Calciumionen befreiten Sole gewonnen wird.

7. Verfahren nach einem der Ansprüche 1 bis 6, **dadurch gekennzeichnet, dass** das Herstellen von Natriumcarbonat und/oder Natriumbicarbonat durch Umsetzen des Natriumhydroxids mit Kohlendioxid (8) und das Ausfällen des Carbonatfällungsproduktes (9) aus der Sole in einem gemeinsamen Verfahrensschritt stattfinden, wobei Kohlendioxid (8) und Natriumhydroxid separat zugegeben werden und zu Natriumcarbonat und/oder Natriumbicarbonat reagieren, wobei das Natriumcarbonat und/oder Natriumcarbonat mit Calciumionen aus der Sole in situ weiter zu Calciumcarbonat reagiert.

8. Verfahren nach einem der Ansprüche 1 bis 7, **dadurch gekennzeichnet, dass** das Herstellen von Natriumcarbonat und/oder Natriumbicarbonat durch Umsetzen des Natriumhydroxids mit Kohlendioxid (8) wenigstens teilweise in einem vorgelagerten Verfahrensschritt, getrennt vom Ausfällen des Carbonatfällungsproduktes (9) aus der Sole, stattfindet.

9. Vorrichtung zum Gewinnen von Natriumchlorid (12) aus einer Calciumionen enthaltenden Sole, umfassend
einen Carbonatfällungsreaktor zum Ausfällen eines Calciumcarbonat enthaltenden Carbonatfällungsproduktes (9) aus der Sole mit Natriumcarbonat und/oder Natriumbicarbonat als Fällungsreagens,
eine Salzsiedeanlage (11) zum Gewinnen von Natriumchlorid (12) aus der im Wesentlichen von Calciumionen befreiten Sole,
einen Elektrolyseur zum Herstellen von Natriumhydroxid durch Elektrolyse von Natriumchlorid (12),
einen Sodareaktor zum Herstellen von Natriumcarbonat und/oder Natriumbicarbonat durch Umsetzen des Natriumhydroxids mit Kohlendioxid (8),
wobei das durch Umsetzen des Natriumhydroxids mit Kohlendioxid (8) hergestellte Natriumcarbonat und/oder Natriumbicarbonat wenigstens teilweise als Fällungsreagens zum Ausfällen des Carbonatfällungsproduktes (9) verwendet wird.

10. Vorrichtung nach Anspruch 9, **dadurch gekennzeichnet, dass** die Vorrichtung eine Kalkbrenneinheit zum Herstellen von Calciumoxid und Kohlendioxid (8) aus dem Carbonatfällungsprodukt (9) enthält.

11. Vorrichtung nach Anspruch 10, **dadurch gekennzeichnet, dass** eine leitungsmäßige Verbindung zum Überführen von Kohlendioxid (8) aus der Kalkbrenneinheit in den Sodareaktor vorgesehen ist, sodass das beim Herstellen von Calciumoxid aus dem Carbonatfällungsprodukt (9) gebildete Kohlendioxid (8) wenigstens teilweise zum Herstellen des Natriumcarbonats und/oder Natriumbicarbonats verwendbar ist.

12. Vorrichtung nach Anspruch 10 oder 11, **dadurch gekennzeichnet, dass** die Vorrichtung einen Sulfatfällungsreaktor zum Ausfällen eines Magnesiumhydroxid und/oder Calciumsulfat enthaltenden Sulfatfällungsproduktes (4) aus der Sole aufweist, wobei eine leitungsmäßige Verbindung und/oder eine Fördereinrichtung zwischen der Kalkbrenneinheit und dem Sulfatfällungsreaktor vorgesehen ist, sodass Calciumoxid aus der Kalkbrenneinheit, vorzugsweise nach Umsetzung des Calciumoxids zu Calciumhydroxid, als Fällungsreagens zum Ausfällen des Sulfatfällungsproduktes (4) verwendbar ist.

13. Vorrichtung nach einem der Ansprüche 9 bis 12, **dadurch gekennzeichnet, dass** eine leitungsmäßige Verbindung und/oder eine Fördereinrichtung zwischen der Salzsiedeanlage (11) und dem Elektrolyseur vorgesehen ist, sodass aus der im Wesentlichen von Calciumionen befreiten Sole gewonnenes Natriumchlorid (12) zum Herstellen von Natriumhydroxid verwendbar ist.

14. Vorrichtung nach einem der Ansprüche 9 bis 13, **dadurch gekennzeichnet, dass** der Carbonatfällungsreaktor zugleich auch als Sodareaktor verwendbar ist, wobei Kohlendioxid (8) und Natriumhydroxid dem Carbonatfällungsreaktor separat zuführbar sind und in situ zu Natriumcarbonat und/oder Natriumbicarbonat reagieren können, welches mit Calciumionen aus der Sole weiter zu Calciumcarbonat reagieren kann.

15. Vorrichtung nach einem der Ansprüche 9 bis 14, **dadurch gekennzeichnet, dass** der Sodareaktor als ein vom Carbonatfällungsreaktor verschiedener Behälter ausgeführt ist, sodass das Herstellen von Natriumcarbonat und/oder Natriumbicarbonat räumlich getrennt vom Ausfällen des Carbonatfällungsproduktes (9) aus der Sole durchführbar ist.
